# EUROPEAN PATENT APPLICATION

(11) **EP 3 902 341 A1**
(43) Date of publication of application: **27.10.2021**
(21) Application number: 20170902.9
(22) Date of filing: 22.04.2020
(51) Int. Cl.: H04W 64/00, H04W 84/00

(54) **RADIO MAP GENERATION FOR MOVING VENUES**

(71) Applicant: HERE Global B.V., 5611 ZT Eindhoven (NL)
(72) Inventor: IVANOV, Pavel, 33100 Tampere (FI); WIROLA, Lauri Aarne Johannes, 33100 Tampere (FI); NURMINEN, Henri, 33100 Tampere (FI)
(74) Representative: Cohausz & Florack

(57) **Abstract**

Inter-alia, a method is disclosed comprising: obtaining or determining at least one first position estimate, wherein the at least one first position estimate is indicative of a first position of at least one electronic device, wherein the first position is in relation to a global coordinate system; obtaining or determining at least one venue location information indicative of a location and orientation of a moving venue in relation to the global coordinate system; and determining at least one transformed position estimate by transforming the first position of the at least one first position estimate into a transformed position in relation to a local coordinate system of the moving venue based, at least in part, on the at least one venue location information. It is further disclosed an according apparatus, computer program and system.

## Description

### FIELD

The following disclosure relates to the field of positioning, or more particularly relates to systems, apparatuses, and methods for enabling positioning on or within a moving venue.

### BACKGROUND

Modern global cellular (GSM (Global System for Mobile Communications), CDMA (Code Division Multiple Access), WDCMA (Wideband CDMA), TD-SCDMA (Time Division Synchronous CDMA), LTE (Longterm Evolution), LTE-A (LTE Advanced), NB-IoT (NarrowBand-Internet-of-Things)) and non-cellular (primarily WLAN (Wireless Local Area Network), but also BT (Bluetooth), BLE (Bluetooth Low Energy), ZigBee, LoRa, to name but a few non-limiting examples) positioning technologies are based on collecting large global databases containing information on the cellular and non-cellular signals. A large portion of the data typically originates from the users of these positioning technologies.

The data from the users is typically in the form of so-called fingerprints respectively fingerprint information. Such fingerprints contain GNSS (Global Navigation Satellite System)-based or non GNSS-based, e.g. WLAN-based position estimates and measurements taken from the radio interfaces (cellular, non-cellular).

The measurements contain e.g.:
- Global and/or local IDs of the cellular network cells observed, and, optionally,
   - signal strength and/or pathloss estimates;
   - timing measurements (Timing Advance or Round-Trip Time);
- BSSIDs (Basic Service Set Identifiers) and/or MAC (Medium Access Control) address of the air interface of the WLAN access points observed and, optionally;
   - SSIDs (Service Set Identifiers);
- signal strengths (RSSI (Received Signal Strength Index), physical Rx level in dBm ref 1 mW, etc.); and/or
- timing measurements (Round-trip Time).

This data gets uploaded to a server or server cloud, where generating of models of wireless communication nodes for positioning purposes based on the fingerprints received from the multitude of the users takes place. Such models may be coverage areas, node positions, radio propagation models, Rx fields, etc. Such models may be referred to as radio maps. In the end, e.g. these models may be transferred back to the user terminals for use in position determination.

Although the end user terminals have GNSS-capability, the end users can still benefit from using cellular/non-cellular positioning technologies in terms of time-to-first-fix and power consumption. Also, not all applications require highly accurate position (e.g. for local weather application it suffices to use cell-based location estimate). Also, cellular/non-cellular positioning technologies work indoors and in urban canyons, which are generally challenging environments for GNSS-based technologies.

The positioning can function in two modes. The first mode is the terminal-assisted mode, in which the terminal performs the measurements of the cellular and/or non-cellular air interface, provides the measurements to a remote server, which in turn provides the position estimate back to the device.

The second mode is the terminal-based mode, in which the device has a local copy of the radio map (or most likely, a subset of the global radio map). Such a subset can be downloaded by the device from a remote server for the (geographic) area of interest (e.g. a small area around the current location, or for a whole country, to name but a few non-limiting examples) out of a global radio map comprising a plurality of such subsets. Such a subset can further be pre-installed onto the device in the factory, but even in that case the data needs to be refreshed at some point.

For the static venues (e.g. buildings), conversion from global coordinates to local coordinate system of the venue is based on constant parameters (e.g. translation, rotation, scaling). Then, for the static venues, a radio map can be generated in the local and/or global coordinate systems in a straightforward way.

### SUMMARY OF SOME EXEMPLARY EMBODIMENTS

In this section, exemplary aspects of the invention are disclosed.

However, it becomes a problem when a venue can move (e.g. ships). Namely, it needs to be solved how to map probe data to the respective coordinate system of the moving venue based on GNSS and additionally inertial sensors data associated with the probe.

It is thus, inter alia, an object of the present invention to enable radio map generation for and localization within such moving venues.

According to a first exemplary aspect, a method is disclosed, the method comprising:
- obtaining or determining at least one first position estimate, wherein the at least one first position estimate is indicative of a first position of at least one electronic device, wherein the first position is in relation to a global coordinate system;
- obtaining or determining at least one venue location information indicative of a location and orientation of a moving venue in relation to the global coordinate system; and
- determining at least one transformed position estimate by transforming the first position of the at least one first position estimate into a transformed position in relation to a local coordinate system of the moving venue based, at least in part, on the at least one venue location information.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a mobile terminal such as a smartphone, tablet, wearable, IoT (Internet-of-Things) device. For instance, the method may be performed and/or controlled by using at least one processor of the electronic device.

According to a further exemplary aspect, a computer program is disclosed, the computer program when executed by a processor causing an apparatus, for instance a server, to perform and/or control the actions of the method according to the first exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a second exemplary aspect, an apparatus is disclosed, configured to perform and/or control or comprising respective means for performing and/or controlling the method according to the first exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect, an apparatus is disclosed, comprising at least one processor and at least one memory including computer program code, the at least one memory and the computer program code configured to, with the at least one processor, cause an apparatus, for instance the apparatus, at least to perform and/or to control the method according to the first exemplary aspect.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise only the disclosed components, for instance means, processor, memory, or may further comprise one or more additional components.

According to a third exemplary aspect, a system is disclosed, comprising: one or more electronic devices (e.g. according to the second exemplary aspect); and at least one positioning server (e.g. according to the second exemplary aspect), wherein the one or more electronic devices and the at least one positioning server are configured to perform and/or control the method of the first exemplary aspect together.

In the following, exemplary features and exemplary embodiments of all aspects of the present invention will be described in further detail.

The moving venue, as used herein, may be understood as an area within which a position of an electronic device may be determined (e.g. estimated). The moving venue can at least temporarily move in relation to a previous location, or change its orientation (e.g. rotating in a two-dimensional plane). The area of the moving venue may comprises one or more indoor and/or outdoor parts, one or more rooms, floors, elevators, escalators, open spaces, places or the like. The area may be of a certain size so that a position to be determined for a user respective an electronic device of a user becomes useful, e.g. the area having a size of at least 10, 20, 30, 40, 50 m² or more. Examples of such a moving venue may for instance be a cruise ship, ferry, cargo ship, aircraft carrier, yacht, or in general a ship e.g. having a certain size, train, aircraft, or an offshore building (e.g. oil platform), to name but a few non-limiting examples.

According to an exemplary embodiment of all exemplary aspects of the present invention, a position in relation to the global coordinate system comprises or is represented by at least a latitude value and a longitude value.

The global coordinate system, as used herein, may be understood as a reference model (e.g. ellipsoid) that is a mathematical model representing a shape of the Earth. Such a global coordinate system may have its major axis along the equatorial radius of the Earth. Such a (e.g. geographic) global coordinate system uses e.g. longitude and latitude values expressed in decimal degrees as a coordinate pair. With such a coordinate pair (e.g. X-, Y- coordinates, or latitude-, longitude coordinates), all locations on Earth can be specified in relation to the global coordinate system.

A plurality of such coordinate pairs, e.g. latitude and longitude values may form a coordinate system grid. The coordinate pair in case of X-, Y- coordinates, or latitude-, longitude coordinates refer to a two-dimensional space. In addition, latitude and longitude values may be referenced to a horizontal datum. Further, coordinates may also be in the form of triplets (X-, Y-, and Z-coordinates, or latitude-, longitude-, and altitude-coordinates) of points which also has a height respectively an altitude value referenced e.g. to a vertical datum. In other words, the X- and Y-values represent a horizontal position, and the Z-value, if available, represents a vertical position.

X-, Y-, or latitude- and longitude-coordinates, and optionally Z-, or altitude-coordinates may be specified in degrees-minutes-seconds (DMS) and/or decimal degrees.

The global coordinate system may have the Y-value or latitude value of 0° set to the equator, and covers the Earth to 90° north, and to 90° south. Further, the global coordinate system may have the X-value or longitude value of 0° set to a line passing through Greenwich, and covering the Earth to 180° east and to 180° west.

For example, the disclosed method may be part of a GNSS based positioning solution performed by the at least one electronic device to obtain or determine an estimate of its position (e.g. the first position estimate of the electronic device). The electronic device may be enabled for or support such GNSS based positioning based on the Galileo system or the GPS system. This may be understood to mean that the electronic device is configured to estimate its position at least partially based on one or more GNSS signals (e.g. GNSS signals received e.g. from at least four GNSS satellites) received at this position, the GNSS signals e.g. comprising GNSS navigation data (e.g. GNSS navigation data of the at least four GNSS satellites). For example, the electronic device may be configured to (e.g. periodically or repeatedly or continuously) scan for GNSS signals observable at the position of the electronic device. The electronic device may further be enabled to receive GNSS signals (at least one GNSS signal) from one or more (e.g. from at least four) GNSS satellites during a time period, e.g. for estimating its position.

The local coordinate system of the moving venue, as used herein, may be understood as a coordinate system grid defined in relation to the moving venue. For instance, the local coordinate system may be a coordinate system grid defined over at least the area, or a part of it (e.g. sub-area), of the moving venue. Such a sub-area may for instance exclude some locations of the moving venue e.g. that may be inaccessible to the public or some individuals that are within or on the moving venue. For instance, such parts of the moving venue not admissible for the public or some individuals may be not covered by the local coordinate system of the moving venue. Further, these parts may not be comprised by a radio map covering the area, or a part of it, of the moving venue. A position in relation to the local coordinate system may be independent of whether or not the venue moves. In this way, such a local coordinate system of the moving venue may enable to determine (e.g. estimate) a position in relation to the moving venue. The local coordinate system of the moving venue may be limited to the area of the moving venue. Additionally, a certain area within the vicinity of the moving venue, e.g. a radius around the outer borders of the moving venue of e.g. 100 m or less may be covered by the grid of the local coordinate system, as well.

Such an electronic device (e.g. the electronic device according to the second exemplary aspect), as used herein, may for instance be portable (e.g. weigh less than 5, 4, 3, 2,1 kg, or less). The electronic device may for instance comprise or be connectable to a display for displaying information, e.g. a route that is guided/navigated to a user, to name but one non-limiting example. The electronic device may for instance comprise or be connectable to means for outputting sound, e.g. in the form of spoken commands or information. The electronic device may for instance comprise or be connectable to one or more sensors for determining the devices position, such as for instance a GNSS receiver, in the form of a GPS receiver. The electronic device may for instance comprise or be connectable to one or more sensors, e.g. in the form of an accelerometer and/or a gyroscope and/or magnetometer and/or barometer for gathering (e.g. measuring) further information, such as motion sensor data. The accelerometer and/or the gyroscope may allow for determining a relative position of the electronic device with respect to an absolute position fix (e.g. reference position) from another positioning technology. The barometer may allow for determining the vertical position of the electronic device. The magnetometer may allow for determining a position fix based on a magnetic footprint of the electronic device, for instance. The electronic device may for instance comprise or be connectable to a receiver and/or a transmitter (e.g. a transceiver) for receiving and/or sending information.

The at least one first position estimate is indicative of a first position of the at least one electronic device, wherein the first position is in relation to the global coordinate system. Thus, the first position may for instance be represented by a coordinate pair or triplet comprising values, as disclosed above. The at least one first position estimate may for instance be obtained, e.g. by receiving the at least one first position estimate, e.g. from the at least one electronic device. In this case, the obtaining of the at least one first position estimate may for instance be performed by a server or server cloud performing and/or controlling example embodiments of the method according to the first exemplary aspect. To obtain (e.g. receive) the at least one first position estimate, the at least one first position estimate may for instance be output (e.g. sent) by a respective electronic device. The at least one first position estimate may for instance provide the at least one first position estimate directly so that it can be obtained, or the at least one first position estimate may provide the at least one first position estimate to an entity that is different from the apparatus (e.g. server) obtaining the at least one first position estimate, which relays the at least one first position estimate accordingly to the apparatus.

Alternatively, the at least one first position estimate may for instance be determined, e.g. by receiving a request to determine the position of the at least one first position estimate. Additionally or alternatively, the at least one first position estimate may for instance provide data enabling its position to be determined. For instance, the data may be gathered (e.g. measured) based on one or more signals that are observable and/or receivable from a GNSS positioning system, e.g. signals sent by one or more Galileo- or GPS-satellites by a respective electronic device, to name but a few non-limiting examples. The data may for instance be gathered by one or more sensors that are comprised by or connectable to the at least one electronic device. The one or more sensors may for instance be enabled to observe or receive such signals steming from one or more GNSS positioning systems (e.g. from Galileo- and/or GPS-positioning system).

Based on such data that is e.g. gathered by one or more sensors of the at least one electronic device, estimating of a position of at least one electronic device in relation to the global coordinate system may for instance be enabled.

The at least one venue location information is obtained, e.g. by receiving the at least one venue location information.

The at least one venue location information may be indicative of a location or the location and the orientation of a moving venue in relation to the global coordinate system. The orientation of the moving venue may for instance be comprised or represented by the at least one venue location information, or the orientation may be determined based on at least one location of the at least one venue location information.

The location of the moving venue may be comprised or represented by the at least one venue location information in relation to the global coordinate system. The orientation of the moving venue may be defined by an alignment of the moving venue e.g. in relation to North. This means that the moving venue is oriented in such a way that when it moves, it moves in a northward direction. For instance, the orientation may be specified by a value (e.g. decimal value) e.g. in degrees the orientation of the moving venue differs from a Northbound orientation. The orientation may specify e.g. whether the moving venue is oriented 0° to 180° East or West. 180° East or West may be considered that the moving venue is oriented to the South. This means that the moving venue is oriented in such a way that when it moves, it moves in a southward direction. Thus, 0° East or West may be considered that the moving venue is oriented to the North. Correspondingly, an orientation value between >0° and <180° East may be considered that the moving venue is oriented with a clockwise rotation in relation to the northward direction of the moving venue. Further, an orientation value between >0° and <180° West may be considered that the moving venue is oriented with a counter-clockwise rotation in relation to the northward direction of the moving venue.

Thus, the orientation of the moving venue, as used herein, may be understood to define an angle between the local coordinate system of the moving venue that the moving venue has in relation to the global coordinate system. The at least one transformed position estimate may be determined based, at least in part, on the orientation of the moving venue as comprised or represented by the at least one venue location information. For instance, the orientation of the moving venue may be utilized to e.g. convert coordinates between the global coordinate system and the local coordinate system, and vice versa.

Alternatively, the at least one venue location information is determined, e.g. by the apparatus according to the second exemplary aspect performing and/or controlling the method according to the first exemplary aspect. For instance, to determine the at least one venue location information, one or more data (e.g. probe data references taken from a GNSS positioning system) may be received so that based, at least in part, on these data the at least one venue location information can be determined.

The at least one transformed position estimate is determined, e.g. by transforming (e.g. converting) the first position of the at least one first position estimate that is in relation to the global coordinate system into a transformed position in relation to the local coordinate system of the moving venue. To enable the transforming, the location represented by the venue location information is used, e.g. as a reference location. Thus, it is enabled to determine (e.g. calculate) the first position as represented in a coordinate pair of the global coordinate system to be represent by a corresponding coordinate pair of the local coordinate system of the moving venue. This determining is based, at least in part, on the at least one venue location information. The determining may further be based on a translation, rotation, scaling, or a combination thereof of the first position in relation to the global coordinate system into the transformed position in relation to the local coordinate system of the moving venue.

For instance, latitude- and longitude coordinates (e.g. references of probe data that can be used to determine the at least one first position estimate) can then be determined (e.g. converted) into the local coordinate frame respectively local coordinate system of the moving venue. The probe data can then be mapped to the moving venue as disclosed above. For the moving venue, respective conversion parameters (e.g. translation and rotation) may change in time. Hence in order to make correct conversion respectively converting of the first position at any time, the determining may be done based, at least in part, on the venue location information of the moving venue. The at least one venue location information may comprise a respective location of the moving venue at different times that can be considering for the determining of the at least one transformed position estimate.

According to an exemplary embodiment of the first exemplary aspect, the method further comprises:
- outputting the at least one transformed position estimate, e.g. for further utilization/ applications.

Such a further utilization/application may for instance be a generating of a radio map, in particular a radio map of the moving venue or a radio map of an area, or a part of it, of the moving venue (e.g. a floor and/or a space of the moving venue), to name but one non-limiting example. The generating of the radio map may require further processing of the output transformed position estimate.

The method according to the first exemplary aspect may be used mainly for (e.g. automatic) radio map generation, in particular for moving venues, e.g. cruise ships, ferries, cargo ships, trains, or aircrafts. Accurate and relevant venue location information of the respective moving venue may be obtained e.g. from an electronic device, as disclosed above. Such an electronic device may be at least temporarily stationary in relation to the moving venue may for instance be a navigation system comprised by the moving venue. For instance, this may be one or more navigation systems of the moving venue.

According to an exemplary embodiment of the first exemplary aspect, the method further comprises:
- obtaining or determining at least one location change information, wherein the at least one location change information is indicative of a change of position of the at least one electronic device in relation to the local coordinate system; and
- determining at least one fused position estimate indicative of at least one fused position in relation to the local coordinate system of the moving venue based on the at least one transformed position estimate and the at least one location change information.

The at least one location change information is obtained, e.g. by receiving the location change information from the at least one electronic device. Alternatively, the at least one location change information is obtained, e.g. by requesting the at least one location change information from a storage in which the at least one location change information is stored. For instance, the at least one location change information may be stored in such a storage that is accessible by the apparatus performing and/or controlling the method according to the first exemplary aspect prior to the obtaining of the at least one location change information.

For instance, GNSS data as represented by the at least one first position estimate and motion sensor data as represented by the at least one location change information may be fused (as represented by the at least one fused position estimate) to get a reference estimate while the at least one electronic device (e.g. probe collection device) is moving within or on the moving venue (e.g. deck of a ship). The motion sensor data may for instance comprise inertial sensor data e.g. gathered by an accelerometer and/or a gyroscope. Additionally or alternatively, the motion sensor data may for instance comprise altitude sensor data e.g. gathered by a barometer and/or magnetometer.

Altitude sensor data may enable to determine the location in three-dimensional (3D) coordinates. In case of 3D-coordinates, the location might comprise latitude, longitude and altitude and/or floor information of the moving venue (e.g. floor index of the moving venue).

It will be understood that in addition or in alternative, the first position of the at least one first position estimate, the second position of the at least one second position estimate, the location of the moving venue represented by the at least one venue location information, and/or the change of position of the at least one location change information may be in such 3D-coordinates.

According to an exemplary embodiment of the first exemplary aspect, the method further comprises:
- obtaining or determining at least one second position estimate, wherein the at least one second position estimate is indicative of a second position in relation to the local coordinate system.

The at least one second position estimate may for instance be determined based, at least in part, on one or more signals observable at a current location of the at least one electronic device. The one or more signals may for instance be sent from one or more radio nodes, beacons, or the like. Such one or more radio nodes and/or beacons may for instance be configured according to WiFi, Bluetooth, and/or Bluetooth Low Energy specification. Such one or more radio nodes and/or beacons may for instance enable non GNSS-based positioning, e.g. WiFi Network-based positioning, to name but one non-limiting example.

The at least one second position estimate may for instance be obtained, e.g. by receiving or deriving or requesting the at least one second position estimate from the at least one electronic device, or from a storage in which the at least one second position estimate is stored. The obtaining or determining of the at least one second position estimate may be performed in the same manner as disclosed above with regard to the at least one first position estimate and/or the at least one location change information.

The at least one second position estimate may be determined based, at least in part, on probe data references that were gathered in relation to the local coordinate system of the moving venue. Thus, when the at least one electronic device (e.g. the collection device of the probe), e.g. the at least one electronic device, is within the moving venue or within the area of the moving venue, such probe data references can be gathered, e.g. based on one or more signals sent by one or more radio nodes and/or beacons, as disclosed above.

The at least one fused position estimate may be determined based, at least in part on such probe data references in relation to the local coordinate system of the moving venue, and, at least in part, on data gathered in relation to the global coordinate system (e.g. data from a GNSS).

In an exemplary embodiment according to all aspects of the present invention, the at least one fused position estimate is determined further based on the at least one second position estimate.

The at least one fused position may be determined based, at least in part, on the at least one (obtained or determined) second position estimate. The fused position may be determined (e.g. derived or computed) based on the positions of the at least one transformed position estimate, the at least one second position estimate, and the change of position of the at least one location change information. In case the transformed position estimate is in relation to the local coordinate system of the moving venue, an accurate fused position also in relation to the local coordinate system of the moving venue can be determined. Further, movements of the moving venue can be taken out of the equation to enable determining of accurate position estimates. Position of the second position estimate and the change of position of the location change information may also refer to respective positions of the at least one electronic device. The at least one fused position estimate is e.g. a mixture of aforementioned position estimates, so that e.g. the transformed position of the at least one transformed position estimate may be refined so that it is more accurate.

For instance, it may be more straightforward to use position estimates indicative of a position in relation to the local coordinate system of the moving venue and/or in relation to the global coordinate system after transforming them to the same coordinate system and using them in the same way.

The obtaining or determining at least one second position estimate may be used - thus, being part of an example embodiment according to all exemplary aspects of the present invention - when e.g. sensor fusion (with e.g. inertial sensors) computation is done in the at least one electronic device.

In an exemplary embodiment according to all aspects of the present invention, in case the at least one location change information is obtained or determined, the method is performed in real-time or near real-time.

For instance, the probe locations may be converted to the local frame (almost) in real-time by the at least one electronic device. This may be done to compensate the movement (e.g. heading change) of the moving venue (e.g. ship) in the sensor fusion computations.

In an exemplary embodiment according to all aspects of the present invention, the method further comprises:
- transforming the second position of the at least one second position estimate into a position in relation to the global coordinate system based on the at least one venue location information; wherein the at least one second position estimate is transformed prior to the determining at least one fused position estimate; and
   wherein the at least one fused position estimate is determined to be indicative of the at least one fused position in relation to the global coordinate system.

The at least one second position estimate is indicative of a second position in relation to the local coordinate system of the moving venue. For the determining of the at least one fused position estimate, the at least one second position estimate may for instance be transformed to the global coordinate system based, at least in part, on the at least one venue location information. Thus, the step of determining of the at least one transformed position estimate may determine the transformed at least one second position estimate so that it is in relation to the global coordinate system. Then, the at least one first position estimate and the at least one second position estimate are indicative of respective positions in relation to the global coordinate system. The at least one fused position estimate may be determined based on the at least one first position estimate (in relation to the global coordinate system), the at least one second position estimate (in relation to global coordinate system after it is transformed), and the at least one location change information. Such a determined at least one fused position estimate is then in relation to the global coordinate system since the at least one first position estimate and at least one second position estimate are in relation to the global coordinate system.

In an exemplary embodiment according to all aspects of the present invention, the at least one fused position of the at least one fused position estimate is transformed into the local coordinate system of the moving venue after the at least fused position estimate is determined to be indicative of the at least one fused position in relation to the global coordinate system.

Further, the at least one fused position estimate in relation to the global coordinate system may be transformed to be in relation to the local coordinate system of the moving venue based, at least in part, on the at least one venue location information. This latter transforming of the fused position estimate may be performed and/or controlled by the determining of the at least one transformed position estimate in example embodiments according to all exemplary aspects of the present invention.

According to an exemplary embodiment of the first exemplary aspect, the method further comprises:
- generating a radio map for the moving venue based, at least in part, on the at least one transformed position estimate and/or the at least one fused position estimate.

Such a radio map may be configured to enable devices, such as the at least one electronic device, to estimate their position at least partially based on this radio map when the respective device is located in the area covered by the radio map of the moving venue. For example, the radio map is represented by radio map information which may be provided (e.g. transmitted) by a positioning server to the at least one electronic device and/or which may be hold available by the at least one electronic device (e.g. stored in memory means of the at least one electronic device). For example, the radio map contains or represents a respective radio model for a plurality of radio nodes transmitting (e.g. broadcasting) radio signals that are observable within the area covered by the radio map of the moving venue. If the radio map covers an area of the moving venue, the radio map may further contain or represent, for a floor of the moving venue, or for a height within the moving venue, a respective radio model for a plurality of radio nodes transmitting (e.g. broadcasting) radio signals that are observable on the respective floor of the moving venue.

Such radio signals may be terrestrial radio signals. Examples of such a terrestrial radio signal are a BT signal, a BLE signal, a cellular network signal or a WLAN signal. The Bluetooth standards are specified by the Bluetooth Special Interest Group and are presently available under https://www.bluetooth.com/. A cellular network may for example be mobile phone network like a 2G/3G/4G/5G cellular communication network. The 2G/3G/4G/5G cellular radio communication standards are developed by the 3GPP and presently available under http://www.3gpp.org/. WLAN is for example specified by the standards of the IEEE 802.11 family (http://www.ieee.org/).

Such (a) radio node(s) may for instance be used for indoor positioning and/or floor detection, e.g. according to BT- and/or BLE- specification, or may for instance be a Wi-Fi Access Point for indoor positioning and/or floor detection, e.g. according to the WLAN- specification.

Such (a) radio node(s), e.g. located within or on the moving venue, may for instance comprise or be connectable to a transceiver, e.g. according to the BT-, BLE, and/or WLAN-specification to provide wireless-based communication. Each radio node of the one or more radio nodes may for instance use such a transceiver for transmitting and/or broadcasting one or more radio signals, e.g. comprising or containing one or more information and/or potentially manipulated radio signals and/or radio signal parameters.

According to example embodiments of all exemplary aspects of the present invention, location information (e.g. latitude, longitude, heading change, etc.) of the moving venues (e.g. ships) are used to enable radio map generation based on GNSS probe data.

Further, the generating of the radio map may be performed and/or controlled automatically (e.g. not manually). Such automatic radio map generating method may be based on crowd-sourced data, e.g. radio probe data such as the at least one second position estimate. Additionally, data that has latitude/longitude values respectively references, e.g. as comprised by the at least one first position estimate may be utilized for generating such a radio map.

According to an exemplary embodiment of the first exemplary aspect, the method further comprises:
- determining whether or not the first position of the at least one first position estimate is located in a vicinity of the moving venue based, at least in part, on the at least one venue location information, wherein the radio map is generated based, at least in part, on the respective first position of at least one first position estimate if it is located in the vicinity of the moving venue.

Example embodiments according to all exemplary aspects may be applied when the first position of the at least one first position estimate is located in the vicinity of the moving venue.

The first position of the at least one first position estimate is located in the vicinity of the moving venue e.g. when the first position is with a circle of e.g. 100m or less of the moving venue. For instance, the circle may extend e.g. 100m or less from a border of the moving venue covering not only the area of the moving venue, but also a circle of e.g. 100m less surrounding the moving venue. For instance, the first position may be latitude/longitude coordinates. The first position may be within the direct vicinity of the moving venue when it is less than e.g. 100 meters away the moving venue. The vicinity may be determined (e.g. computed) in relation to the global coordinate system of the moving venue. In case the first position is transformed to be in relation to the local coordinate system, it will be understood that the vicinity may be determined in relation to the local coordinate system of the moving venue.

In case it is determined whether or not the first position of the at least one first position estimate is located in the vicinity of the moving venue, e.g. irrelevant pieces of first position estimates that may be obtained or determined may be filtered out. In this way, processing effort of the method according to the first exemplary aspect is reduced and optimized.

In an exemplary embodiment according to all aspects of the present invention, the method further comprises:
- providing the determined radio map; and/or
- determining one or more device position estimates for one or more electronic devices located on the moving venue based on the radio map; and
- providing the respective determined device position estimates.

For instance, in case an electronic device (e.g. the at least one electronic device) uses the above disclosed terminal-based mode for positioning, in which the electronic device has a local copy of the radio map, the determined radio map is provided (e.g. sent) to the respective electronic device. The radio map can be downloaded by the electronic device from a remote server for the area of the moving venue. The radio map may cover a small area around the current location, e.g. a circle of e.g. 100m or less around the moving venue.

In case electronic device (e.g. the at least one electronic device or another positioning server that has stored the radio map of the moving venue) uses a terminal-assisted mode, in which the electronic device performs measurements of the cellular and/or non-cellular air interface, it provides the measurements to a remote server (e.g. an apparatus performing and/or controlling the method according to the first exemplary aspect). The measurements may be comprised or represented by the one or more pieces of fingerprint information indicative of identifiers and/or signals that are observable at the location of the respective electronic devices. The one or more device position estimates may be determined based, at least in part, on the measurements and on the radio map by the remote server. The determined one or more device position estimates may be provided (e.g. sent back) to the respective electronic device.

The remote server may enable terminal-based mode and, in the alternative or in addition, the terminal-assisted mode for one or more electronic devices.

In an exemplary embodiment according to all aspects of the present invention, the at least one second position estimate is determined based on at least one fingerprint information gathered by the at least one electronic device, and/or based on at least one location estimate representing a position in relation to a local coordinate system of the moving venue prior to the obtaining or determining of the at least one second position estimate.

The at least one second position estimate may for instance be determined and/or derived from existing WiFi network-based positioning employed on or within the moving venue. The at least one second position estimate may be determined by the at least one electronic device in a terminal-based mode and/or in a terminal-assisted mode, as disclosed above.

In case a radio map of the moving venue is present, the radio map may be refined based on the determined at least one transformed position estimate to be more accurate by example embodiments according to all exemplary aspects of the present invention. In particular, the radio map may be refined by considering the at least one first position estimate for the generating of the radio map. Thus, the generating of the radio map may be a generating of the radio map for the moving venue the very first time, or a refining or updating of an existing radio map of the moving venue, to name but a few non-limiting examples.

In an exemplary embodiment according to all aspects of the present invention, the at least one location change information comprises sensor data gathered by one or more sensors.

The sensor data may for instance be e.g. motion sensor data. The one or more sensors may for instance be comprised by the at least one electronic device (e.g. one or more electronic devices based on which gathered (e.g. measured) fingerprint information the at least one second position estimates are determined).

The at least one location change information may be determined, e.g. based on the sensor data gathered by the one or more sensors. Such one or more sensors may be one or more motion sensors, gyroscopes, acceleration sensors, barometer sensors, magnetometer sensors, or a combination thereof, to name but a few non-limiting examples. Such one or more sensors may for instance be comprised or connectable to the at least one electronic device. Such one or more sensors may gather (e.g. measure) motion sensor data indicative of a relative motion that is performed by the respective sensor. Then, the at least one location change information may be determined by the apparatus performing and/or controlling the method according to the first exemplary aspect. To determine the at least one location change information, prior to the determining of the at least one transformed position estimate, such data gathered by one or more sensors is obtained (e.g. received or retrieved or requested from the at least one electronic device).

In an exemplary embodiment according to all aspects of the present invention, the at least one first position estimate, the at least one second position estimate, the at least one location change information, and/or the at least one venue location information further comprise a timestamp information indicative of a time and/or date at which the respective position estimate and/or piece of information is obtained or determined.

Such a timestamp information may enable to map the at least one first position estimate, the at least one second position estimate, the at least one location change information, and/or the at least one venue location information to each other, so that accurate determining of the at least one transformed position estimate is enabled. Further, in this way accurate determining of the at least one fused position estimate may be enabled.

According to an exemplary embodiment of the first exemplary aspect, the determining of the at least one fused position estimate further comprises:
- matching the at least one first position estimate, the at least one second position estimate and/or the at least one location change information to the at least one venue location information based, at least in part, on the respective pieces of timestamp information.

For instance, given the time series of the at least one location information of the moving venue (e.g. ship), and probe data with latitude/longitude/time references respectively values as comprised by or represented by the at least one first position estimate, it is enabled to correctly make a conversion of the latitude/longitude references respectively values to the local coordinate system of the moving venue. Thus, the probe data may be mapped correctly to the local coordinate system of the moving venue.

Further, the timestamp information may also be utilized when determining the at least one transformed position estimate, in particular to match the respective pieces of the first position estimate(s) and the pieces of venue location information.

According to an exemplary embodiment of the first exemplary aspect, the determining of the at least one fused position estimate further comprises:
- subtracting a heading change of the moving venue represented by the at least one venue location information from an intrinsic heading change comprised by the at least one first position estimate and/or the at least one location change information,
   wherein the at least one fused position estimate is determined further based on a result of the subtracting.

The moving venue may for instance move along a certain path. It will be understood that the moving venue moves with a certain speed, accelerates, decelerates and/or changes its orientation, to name but a few non-limiting examples. This is referred to as heading change of the moving venue within the meaning of the present invention.

In case an electronic device is located on the moving venue that moves in relation to the moving venue, and the electronic device determines the first position estimate, or gathers probe data to enable the determining of the at least one first position estimate, the electronic device moves at least along with the moving venue. Thus, the at least one first position estimate has a certain intrinsic heading change comprised by the at least one first position estimate complicating the determining of an accurate position of the electronic device with regard to the moving venue. The same may apply to the at least one location change information.

Thus, to enable accurate determining of the at least one fused position estimate, such an intrinsic heading change may be subtracted out of the at least one first position estimate and/or the at least one location change information. The subtracting may be enabled since the at least one venue location information represents a current location of the moving venue.

When such a heading change is subtracted (e.g. removed) from the at least one first position estimate and/or from the at least one location change information, a position of the at least one electronic device with regard to the moving venue can be determined.

In an exemplary embodiment according to all aspects of the present invention, the at least one venue location information is obtained based on a gathering by an electronic device being coupled to the moving venue, or by the at least one electronic device being in a static location in relation to the moving venue.

For instance, the at least one venue location information may for instance be gathered by an electronic device that is at least temporarily stationary in relation to the moving venue. This electronic device may be comprised by the moving venue. The electronic device being stationary in relation to the moving venue is enabled to determine the at least one venue location information, e.g. based, at least in part, on a GNSS positioning system. For instance, the electronic device being stationary in relation to the moving venue may comprise one or more sensors enabling to determine the location of the moving venue. After such an electronic device has determined the at least one venue location information, the at least one venue location information may for instance be provided (e.g. output) so that it can be received, e.g. by the apparatus according to the second exemplary aspect performing and/or controlling the method according to the first exemplary aspect.

For instance, since the at least one venue location information may be determined based, at least in part, on gathered data by an electronic device that is stationary in relation to the moving venue, accurate heading change of the moving venue is represented by the at least one venue location information.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of an example embodiment of a system according to all exemplary aspects;
- Fig. 2: a schematic block diagram of the system according to Fig. 1 in a detailed view of the moving venue;
- Fig. 3: a flowchart showing an example embodiment of a method according to all exemplary aspects; and
- Fig. 4: a schematic block diagram of an example embodiment of an apparatus according to all exemplary aspects.

### DETAILED DESCRIPTION OF SOME EXEMPLARY EMBODIMENTS

The following description serves to deepen the understanding of the present invention and shall be understood to complement and be read together with the description as provided in the above summary section of this specification.

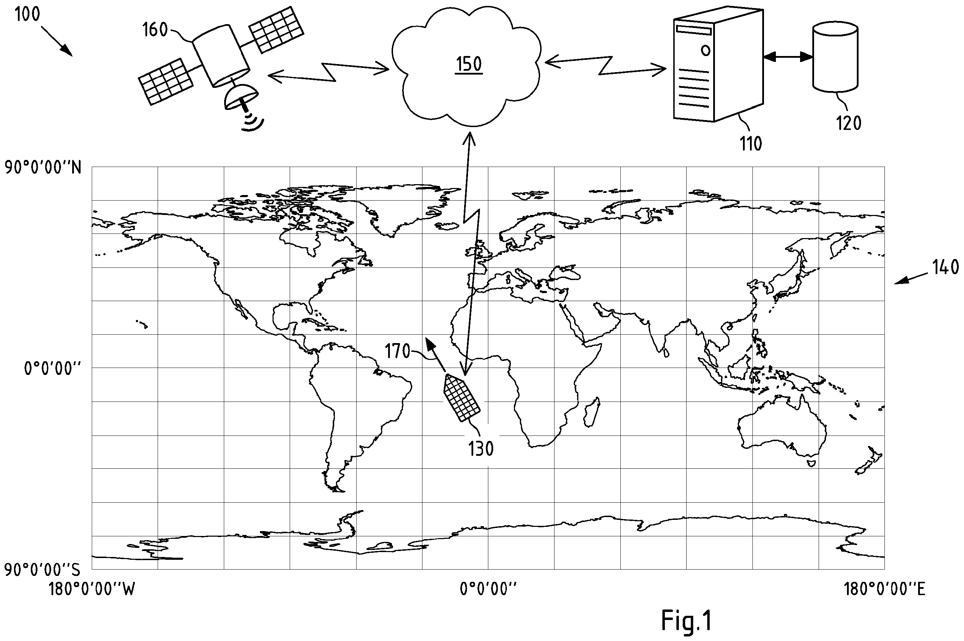

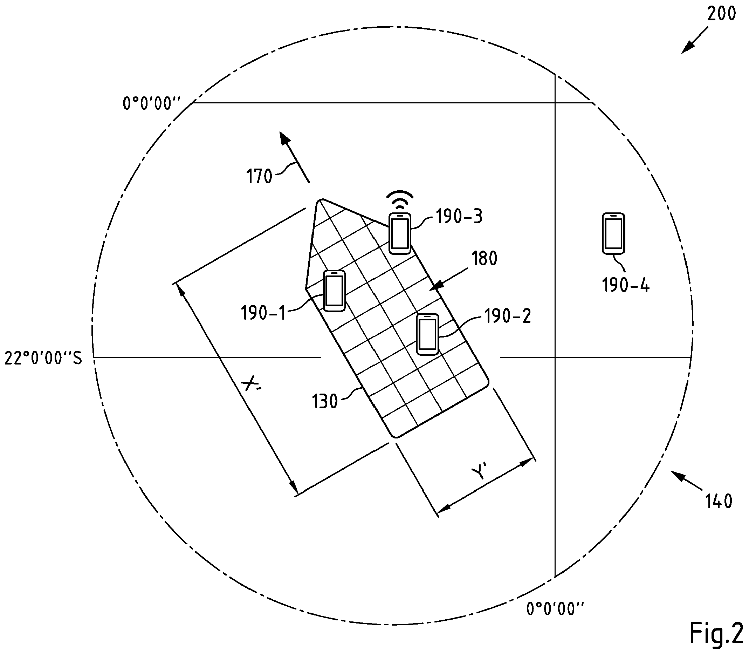

Fig. 1 is a schematic high-level block diagram of a system that is configured to perform and/or control the method according to the first exemplary aspect. The system 100 comprises a server 110. Alternatively, server 110 may be embodied as a server cloud comprising at least two servers. Such servers of the server cloud may provide one or more services (e.g. positioning) e.g. to one or more electronic devices (e.g. electronic devices 190 shown in Fig. 2) at least partially jointly. System 100 further comprises an optional database 120. Database 120 may be suitable to store one or more pieces of information. Database 120 may for instance store one or more pieces of first position estimates, one or more pieces of second position estimates, one or more pieces of location change information, one or more pieces of venue location information, one or more pieces of transformed position estimates, one or more pieces of fused position estimates, one or more radio maps or parts thereof, or a combination thereof, to name but a few non-limiting examples. Database 120 may be comprised by the server 110, or database 120 may be connectable to the server 110. Database 120 may further be connectable to one or more entities, e.g. shown or not shown in Fig. 1 of Fig. 2, via a communication network 150 (e.g. the Internet).

System 100 comprises a moving venue 130. At present, moving venue 130 is a ship. Moving venue 130 is heading in a certain direction, as is indicated in Fig. 1 with the vector 170. Thus, the moving venue is heading in a certain direction with a certain speed. It will be understood that the moving venue 130 may additionally change its pace, e.g. by accelerating, decelerating and/or its orientation, by making a left hand or right hand turn. On the moving venue, one or more electronic devices 190 (see Fig. 2) may be located. Additionally or alternatively, such an electronic device (see electronic device 190-3 of Fig. 2) may be comprised by the moving venue 130.

To enable communication between the moving venue 130, one or more electronic devices 190 and the server 110, the communication network 150 optionally being comprised by the system 100 may be used. The communication network may be a cellular (e.g. according to 3G/4G/5G/New Radio or future communication standard), and/or a non-cellular communication network, such as a satellite-based communication network or the Internet, to name but a few non-limiting examples. The communication may be wireless as is illustrated in Fig. 1 by the double arrow pointing between the moving venue 130 and the communication network 150. It will be understood that further communication to one or more other entities e.g. not comprised by the system 100 and not shown in Fig. 1 is possible via the communication network 150.

To enable a determining of at least one venue location information, the moving venue 130 is configured or comprises means (e.g. represented by electronic device 190-3 shown in Fig. 2) to determine its location. For instance, the location of the moving venue 130 may for instance be determined based on one or more signals of a GNSS comprising one or more satellites, from which exemplary one satellite 160 is shown in Fig. 1. Signals sent by the one or more satellites are observable by the moving venue 130 respectively the one or more electronic devices 190 located on or within the moving venue 130. This is indicated in Fig. 1 by the double arrow pointing between the moving venue 130 and the satellite 160.

In Fig. 1, a global coordinate system 140 is illustrated by the overlayed grid. Longitude values are shown on the y-axis having its center line, thus 0°, along the equatorial line of the Earth. The northbound limit is 90° north, and the southbound limit is 90° south. Latitude values are shown along the x-axis, wherein the 0° line is the so-called Greenwich Meridian Line. Westbound limit of the latitude values are 180° west, and accordingly, eastbound limit of the latitude values is 180° east. The moving venue 130 is located at a position of approx. 0° latitude and approx. 22° latitude.

The latitude-, longitude-values form a coordinate pair enabling to define every location on the Earth in relation to this global coordinate system 140.

Example embodiments according to all exemplary aspects of the present invention may be applied as follows: converting radio probe data references represented by at least one first position estimate from latitude/longitude related to the global coordinate system to the local coordinate system of the moving venue 130 may be done. The latitude/longitude references of the probe data in relation to the global coordinate system may already be computed prior to the obtaining of the at least one first position estimate. Thus, they may not be changed. The first position in relation to the global coordinate system is needed to be transformed (e.g. converted) into the local coordinate system of the moving venue 130. In example embodiments according to all exemplary aspects of the present invention, this may be done as follows:
1. Make time series of venue location information e.g. utilizing a time stamp information of the moving venue 130 available to the devices that generate a radio map, e.g. so that server 110 obtains the venue location information;
2. Once probe data represented or comprised by at least one first position is obtained (e.g. by the server 110), its location references represented by the first position is transformed (e.g. converted) from latitude/longitude values to the local coordinates of the local coordinate system of the moving venue 130. This may be done by matching the moving venue location/orientation data represented by the at least one venue location information to the probe data represented or comprised by the at least one first position estimate. For instance, the at least one first position estimate and the at least one venue location information may comprise time stamps comprised by respective pieces of timestamp information. Thus, the transforming may be based, at least in part, on such pieces of timestamp information; and
3. Generate a radio map for the moving venue 130 in a local frame respective in relation to the location coordinate system of the moving venue 130.

In the aforementioned way, the probe locations are used as reference location without alterations. The conversion to the local coordinate frame may be done after obtaining (e.g. recording) the data, and can be done by e.g. a positioning server offline (e.g. server 110), and/or by a positioning server or the server 110 in an online mode, to name but one non-limiting example. The latter requires connectivity between the involved entities, such as the server 110 and the electronic devices 190 located within or on the moving venue 130, e.g. via the communication network 150.

Fig. 2 is a schematic block diagram of the system 100 according to Fig. 1 in a detailed view of the moving venue 130.

The detailed view shows a part of the system 100 of Fig. 1, in the following referred to as system 200. Thus, entities comprised by system 200 are also part of the system 100, and vice versa.

The vertical and horizontal lines shown in Fig. 2 relate to the global coordinate system shown in total in Fig. 1. In orientation to the moving venue 130, an additional grid is shown on the moving venue 130. This grid illustrates the local coordinate system 180 of the moving venue 130. The local coordinate system 180 enables to define every location within the area that is defined by the local coordinate system 180, in particular the area within and/or in the vicinity of the moving venue 130. The local coordinate system may be defined by a coordinate pair (X', Y'), wherein the X'-values are related to the length of the moving venue, and the Y'-values are related to the width of the moving venue 130.

The local coordinate system 180 of the moving venue 130 may not be limited to the area of the moving venue 130, but may extend beyond the boundaries of the moving venue 130. For instance, the local coordinate system 180 may extend for approx. 100 m over the boundaries of the moving venue 130, to enable that a position of an electronic device being in the vicinity of the moving venue 130, but not being within the area of the moving venue 130 may be determined.

The system 200 comprises one or more electronic devices, wherein exemplary four electronic devices 190-1 to 190-4 are shown. The electronic device 190-4 is not located on the moving venue 130 respectively within the area of the moving venue 130. Thus, in case it is determined whether or not the first position of the at least one first position estimate is located in a vicinity of the moving venue based, at least in part, on the at least one venue location, such a first position estimate may be excluded from further utilization, e.g. generating of a radio map.

As disclosed above, electronic device 190-3 is comprised by the moving venue 130. Thus, the electronic device 190-3 may be part of a navigation system of the moving venue 130, e.g. part of a ship's navigation system in case moving venue 130 represents the ship.

Electronic device 190-1 and 190-2 may be electronic devices carried by respective users or persons traveling or working on the moving venue 130, to name but one non-limiting example. The electronic devices 190-1 and 190-2 may in a first step, determine a respective first position estimate and provide it e.g. to the server 110. The server 110 may then generate a radio map for the moving venue 130 based, at least in part on the first position estimates. Then, the server 110 may obtain (e.g. receive) a request of an electronic device (e.g. electronic device 190-1 and/or 190-2) that the respective devices want their position on the moving venue 130 to be determined. The server 110 may then determine the position and provide (e.g. send) the result back to the respective device. The electronic device may then utilize the result, e.g. to determine its position on or within the moving venue, and/or to enable navigation from an origin location on the moving venue 130 to a destination location on the moving venue 130, to name but one non-limiting example.

Alternatively, the server 110 may provide (e.g. sent) the generated radio map, or a part thereof, to the respective electronic devices 190-1 and 190-2. In this way, the respective electronic devices may be enabled to determine their respective location on the moving venue 130 in the terminal-based mode, as disclosed above.

Thus, the following embodiments of the present invention are enabled by one or more of the following steps that may for instance be performed and/or controlled of example embodiments according to all exemplary aspects of the present invention:
1. Obtain input data:
   a. First position estimate in global coordinate frame (e.g. GNSS);
   b. Second position estimate in local coordinate frame (e.g. from existing WIFI Network-based positioning system);
   c. Location change information (e.g. motion sensor data comprising inertial sensor data and/or altitude sensor data); and/or
   d. Venue location information.
2. If location change data is not available:
   a. Transform position estimates in global coordinate system to local coordinate system; and
   b. Output transformed position estimates (in local coordinate) system for further processing, e.g. determine a radio map;
3.alternative.i. If location change data is available:
   i.a. Transform the input data 1.b. to global coordinate system based on 1.d;
   i.b. Compute fused position estimates based on 1.a., 1.b.(transformed) and 1.c. (fused position estimates are in global frame); and
   i.c. Transform fused position estimates to local coordinate frame based on 1.d; or
3.alternative.ii. If location change data is available:
   ii.a. Transform the input data 1.a. to local coordinate system based on 1.d; and
   ii.b. Compute fused position estimates based on 1.a.(transformed), 1.b. and 1.c. (fused position estimates are in local frame);
4. Output fused position estimates (in local coordinate) system for further processing, e.g. determine a radio map; and
5. Optionally determine a radio map based on transformed position estimates (in local coordinate) and/or fused position estimates (in local coordinate).

If location change data is available, two different embodiments may be used. The first embodiment is referred to as 3.alternative.i, and the second embodiment is referred to as 3.alternative.ii above.

The embodiment 3.alternative.i differs from the embodiment 3.alternative.ii that the input data 1.b is transformed from values in relation to the local coordinate system into values in relation to the global coordinate system. This transformation is performed and/or controlled before the fused position estimates are determined (e.g. computed; step i.a in 3.alternative.i). Thus, the one or more fused position estimates are determined based on value in relation to the global coordinate system (step i.b in 3.alternative.i). After the determining, e.g. computing of the fused position estimates is done, the fused position estimates are transformed again (see step i.c in 3.alternative.i): from one or more values in relation to the global coordinate system into one or more values in relation to the local coordinate system of the moving venue. Since the one or more positon estimates are in relation to the local coordinate system of the moving venue after they are transformed from one or more values in relation to the global coordinate system into one or more values in relation to the local coordinate system of the moving venue, they may be output (see step 4) for further processing, e.g. for determining a radio map to name but one non-limiting example.

In comparison, the embodiment 3.alternative.ii transforms the input data 1.a from values in relation to the local coordinate system into values in relation to the global coordinate system, and leaves the input data 1.b as it is (values in relation to the local coordinate system). This may be done since e.g. the input data 1.a may comprise values in relation to the global coordinate system. Input data 1.b and 1.c may respectively comprise values in relation to the local coordinate system of the moving venue. Then, the one or more fused position estimates are determined based on value(s) in relation to the local coordinate system of the moving venue. There may be no need to further transform the one or more fused position estimate(s). Since the one or more fused positon estimates are in relation to the local coordinate system of the moving venue after they are determined (e.g. computed), they may be output (see step 4) for further processing, e.g. for determining a radio map to name but one non-limiting example.

In this way, it is enabled to generate a radio map at and/or for moving venues such as cruise ships, ferries, ships, trains, or aircrafts, to name but a few non-limiting examples.

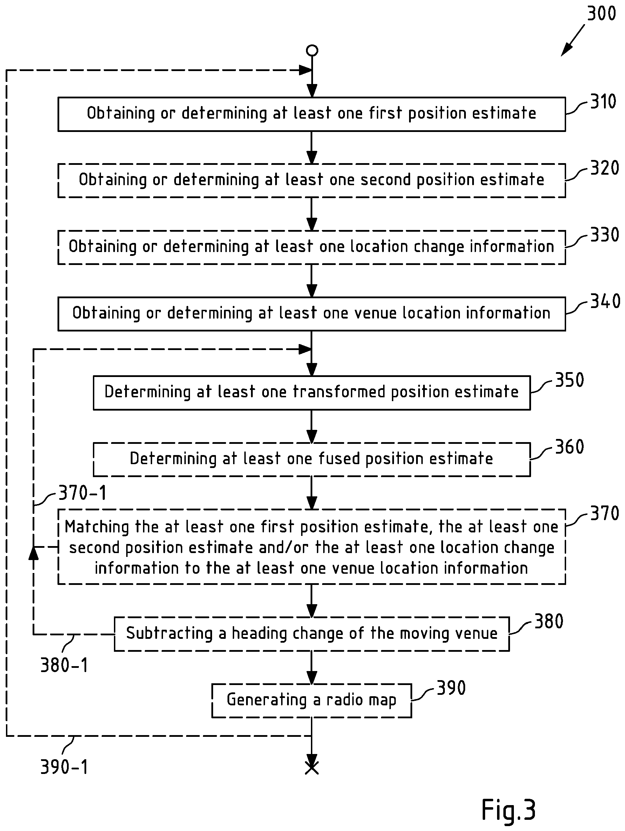

Fig. 3 is a flowchart 300 showing an example embodiment of a method according to the first exemplary aspect. This flowchart 300 may for instance be performed by a server, and/or an electronic device, e.g. server 110, and/or one or more of the electronic devices 190 of Fig. 2.

In a first step 310, at least one first position estimate is obtained or determined. The at least one first position estimate may for instance be obtained (e.g. received or retrieved) from a storage, e.g. database 120 of Fig. 1. For instance, one or more of the electronic devices 190 of Fig. 2 may have stored a respective first position estimate in the database 120 of Fig. 1 prior to the obtaining. Alternatively or additionally, the at least one first position estimate may for instance be obtained, by receiving the at least one first position estimate from the one or more electronic devices 190 of Fig. 1. The one or more electronic devices 190 of Fig. 1 may for instance sent the respective first position estimates to the server 110 of Fig. 1, in case step 310 is performed and/or controlled by the server 110 of Fig. 1.

Alternatively, the at least one first position estimate is determined, e.g. based, at least in part, on one or more probe data gathered (e.g. measured) by the one or more electronic devices 190 of Fig. 2. Such probe data may be provided from the one or more electronic devices 190 of Fig. 2 to the server 110 of Fig. 1 in case step 310 is performed and/or controlled by the server 110 of Fig. 1. Based, at least in part, on such probe data, the at least one first position estimate can be determined.

The at least one first position estimate is indicative of a first position of at least one electronic device, e.g. electronic device 190-1 or 190-2 of Fig. 2, or of both electronic devices 190-1 and 190-2 of Fig. 2. In the latter case, more than one first position estimate is obtained or received from the respective electronic devices 190-1 and 190-2 of Fig. 2. The respective first position estimate(s) may be determined based on signals gathered (e.g. measured) by the respective electronic devices 190-1 and/or 190-2 of Fig. 2, in particular based on one or more signals of GNSS-based positioning system(s) that are observable by the respective electronic device(s) 190-1 and/or 190-2 of Fig. 2 at their current position. Such a GNSS-based positioning system may for instance comprise one or more satellites sending the one or more signals, such as satellite 160 of Fig. 1. The respective first position estimate(s) may comprise or represent (a) respective first position(s) of the respective electronic device(s) 190-1 and/or 190-2 of Fig. 2 that gathered the signals of the GNSS-based positioning system allowing to determine the position of the respective electronic device(s) 190-1 and/or 190-2 of Fig. 2 in relation to the global coordinate system 140, which grid is shown in Fig. 1 and Fig. 2.

Such a first position estimate obtained from the electronic device 190-4 of Fig. 2 may for instance not be considered since the respective first position is not in the vicinity of the moving venue 130. To determine whether or not a respective first position of a respective first position estimate is in the vicinity of the moving venue, a respective first position may be compared to a respective venue location information (see step 340).

In an optional second step 320, at least one second position estimate is obtained or determined. The at least one second position estimate may for instance be obtained (e.g. received or retrieved) from a storage, e.g. database 120 of Fig. 1. For instance, one or more of the electronic devices 190 of Fig. 1 may have stored a respective second position estimate in the database 120 of Fig. 1. Alternatively or additionally, the at least one second position estimate may for instance be obtained, by receiving the at least one second position estimate from the one or more electronic devices 190 of Fig. 2. The one or more electronic devices 190 of Fig. 2 may for instance sent the respective second position estimates to the server 110 of Fig. 1, in case step 320 is performed and/or controlled by the server 110 of Fig. 1.

Alternatively, the at least one second position estimate is determined, e.g. based, at least in part, on one or more probe data gathered (e.g. measured) by the one or more electronic devices 190 of Fig. 2. Such probe data may be provided from the one or more electronic devices 190 of Fig. 2 to the server 110 of Fig. 1 in case step 320 is performed and/or controlled by the server 110 of Fig. 1. Based, at least in part, on such probe data, the at least one first position estimate can then be determined.

The at least one second position estimate is indicative of a second position of a respective electronic device in relation to the local coordinate system of the moving venue 130, as shown in Fig. 1 and Fig. 2. The at least one second position estimate may be obtained or determined based on data that is received from at least one electronic device, e.g. electronic device 190-1 and/or 190-2 of Fig. 2. In contrast to the at least one first position estimate, the at least one second position estimate may be determined based on signals gathered (e.g. measured) by the respective electronic devices 190-1 and/or 190-2 of Fig. 2, in particular based on one or more signals of non GNSS-based positioning system(s) that are observable by the respective electronic device(s) 190-1 and/or 190-2 of Fig. 2 at their current position. Such a non GNSS-based positioning system may for instance be a WiFi-, and/or Bluetooth- and/or Bluetooth Low Energy-based positioning system. For instance, the moving venue 130 of Fig. 1 and Fig. 2 may have one or more radio nodes, e.g. access points, beacons, or a combination thereof installed. Signals sent by such radio nodes may be observable at a current position of the respective electronic device 190-1 and/or 190-2 of Fig. 2. The respective position of the one or more respective radio nodes may be known so that based on the signals of one or more respective radio nodes that are observable at the current position of the respective electronic device 190-1 and/or 190-2 of Fig. 2, the corresponding position of the respective electronic device 190-1 and/or 190-2 of Fig. 2 can be determined (e.g. estimated). This current position is comprised or represented by the second position of the respective at least one second position estimate. Since such a non GNSS-based positioning system is installed on or comprised by the moving venue, the respective second position that is determined may be in relation to the local coordinate system of the moving venue, and not in relation to the global coordinate system.

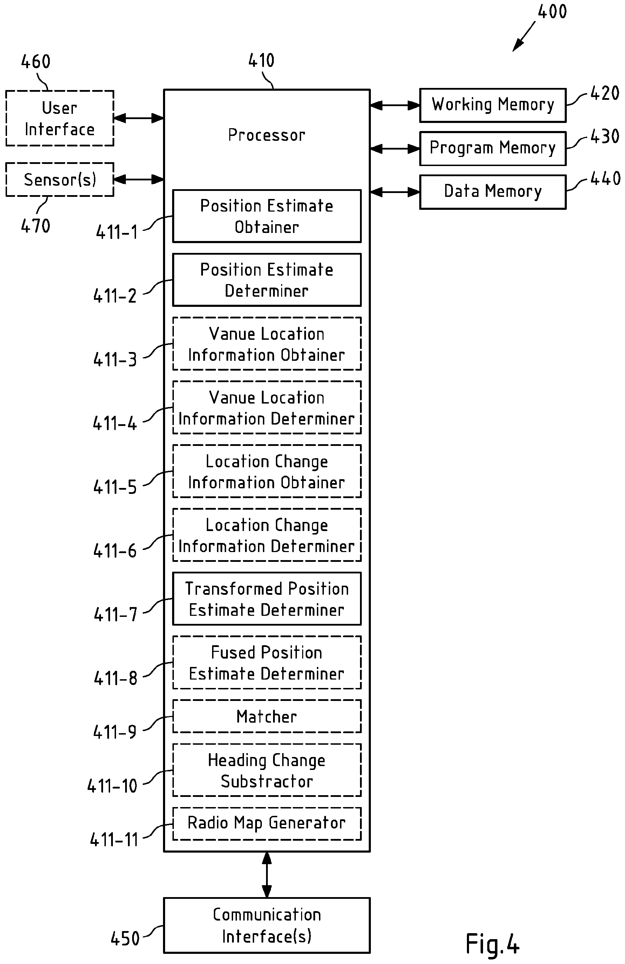

In an optional third step 330, at least one location change information is obtained or determined. The at least one location change information may be determined based, at least in part, on data gathered (e.g. measured) by one or more sensors, e.g. as comprised by or connectable to a respective electronic device of the one or more electronic devices 190 of Fig. 2. For instance, the one or more sensors may be sensor(s) 470 of apparatus 400 of Fig. 4 in case apparatus 400 of Fig. 4 represents one of the one or more electronic devices 190 of Fig. 2. For instance, data gathered by such one or more sensors may be provided from a respective electronic device comprising or being connectable to the one or more sensors to the apparatus performing and/or controlling step 330. In case step 330 is performed and/or controlled by the respective electronic device that gathered the data with the one or more sensors, such a provision may not be necessary.

Also, the at least one location change information may be determined by the respective electronic device that gathered the data with the one or more sensors, and then the at least one location change information is provided (e.g. sent) by the respective electronic device to the respective apparatus performing and/or controlling the step 330.

The at least one location change information is indicative of a change of position of a respective electronic device (e.g. electronic device 130 of Fig. 1 and Fig. 2) in relation to the local coordinate system of the moving venue. The at least one location change information may for instance comprise e.g. motion sensor data comprising inertial sensor data and/or altitude sensor data that is gathered by one or more sensors comprised by or connectable to the respective electronic device (e.g. electronic device 190-1 and/or 190-2 of Fig. 2). The one or more sensors may for instance be accelerometer(s), gyroscope(s), barometer(s), magnetometer(s), or a combination thereof. Such an accelerometer and/or the gyroscope may allow for determining a relative position, thus a change of position, of the respective electronic device 190-1 and/or 190-2 of Fig. 2 with respect to an absolute position fix (reference position) from another positioning technology, e.g. as represented by a respective first position in relation to the global coordinate system of the at least one first position estimate (see step 310). The barometer(s) may allow for determining a vertical position or altitude change, also referred to as relative altitude position of the respective electronic device 190-1 and/or 190-2 of Fig. 2. For instance, the altitude change may be determined by a series of (e.g. at least two) measurements so that the change of data over time can be utilized. The magnetometer may allow for determining a change of position of the respective electronic device 190-1 and/or 190-2 of Fig. 2 based on a magnetic footprint of the respective electronic device(s). This may also be done e.g. by determining a series of (e.g. at least two) measurements so that the change of data over time can be utilized.

In a fourth step 340, at least one venue location information is obtained or determined. The at least one venue location information may for instance be obtained from an electronic device (e.g. electronic device 190-3 of Fig. 2) that is stationary with regard to the moving venue 130 of Fig. 1 and Fig. 2. The at least one venue location information may be obtained, e.g. by receiving the at least one venue location information from the respective electronic device, e.g. electronic device 190-3 of Fig. 2. Alternatively, the electronic device 190-3 of Fig. 2 may for instance store the at least one venue location information in a storage, e.g. database 12 0 of Fig. 1. Then, the at least one venue location information may be obtained by retrieving the at least one venue location information from the database 120 of Fig. 1, e.g. server 110 of Fig. 1.

The at least one venue location information is indicative of a location and orientation of the moving venue (e.g. moving venue 130 of Fig. 1 and Fig. 3) in relation to the global coordinate system. The location of the at least one venue location information may be determined based on one or more signals of GNSS-based positioning system(s) that are observable by the respective electronic device. To ensure that the location of the moving venue can be utilized by example embodiments according to all exemplary aspects, it may be required that the respective electronic device gathering (e.g. measuring or observing) the one or more signals of the GNSS-based positioning system(s) to be stationary in relation to (a) movement(s) of the moving venue 130 of Fig. 1 and Fig. 2. In Fig. 2, the electronic device 190-3 is stationary in relation to the moving venue 130, since it is installed in a fixed location of the moving venue. For instance, the electronic device 190-3 may be a part of a fixed navigation system of the moving venue 130, to name but one non-limiting example. The orientation of the moving venue 130 of Fig. 1 and Fig. 2 may be determined e.g. by a series of (e.g. at least two) locations of the moving venue 130. Due to the series of locations of the moving venue, a heading of the moving venue 130 can be determined (e.g. derived) from the locations. Such a heading of the moving venue 130 can be represented e.g. by a movement vector indicative of the direction (and optionally velocity) of the moving venue 130. Then, the orientation of the moving venue 130 can be determined (e.g. computed) since the movement vector can be brought into relation to the coordinate grid of the global coordinate system, to name but one non-limiting example.

The database 120 of Fig. 1 may have connection via the communication network 150 of Fig. 1 to the database 120 of Fig. 1 enabling one or more entities, e.g. shown in Fig. 1 and Fig. 2 to store and/or read data in and/or from the database 120 of Fig. 1.

Corresponding to the above disclosure with regard to steps 310 and 320, the at least one venue location information may be determined based, at least in part, on one or more probe data gathered (e.g. measured) by an electronic device (e.g. electronic device 190-3 of Fig. 2).

In a fifth step 350, at least one transformed position estimate is determined. The at least one transformed position estimate is determined based, at least in part, on one or more of the information obtained or determined in any one of the step 310 to 340. The at least one transformed position estimate may be determined by a processor, e.g. processor 410 of apparatus 400 of Fig. 4 in case apparatus 400 of Fig. 4 in case step 350 is performed and/or controlled by the apparatus 400.

In an optional sixth step 360, at least one fused position estimate is determined. The at least one fused position estimate is determined based, at least in part, on one or more of the information/position estimates obtained or determined in any one of the step 310 to 350. The at least one fused position estimate may be determined by a processor, e.g. processor 410 of apparatus 400 of Fig. 4 in case step 350 is performed and/or controlled by the apparatus 400.

In an optional seventh step 370 the at least one first position estimate, the at least one second position estimate and/or the at least one location change information are matched to the at least one venue location information, e.g. based on a respective piece of timestamp information that is comprised or represented, at least by a part of the respective at least one first position estimate, the at least one second position estimate and/or the at least one location change information and/or the at least one venue location information.

In an optional eighth step 380 a heading change of the moving venue is subtracted. The heading change may be subtracted to enable more accurate determining of respective positions and/or to enable a more accurate radio map to be generated that can be utilized to determine a position with regard to the moving venue.

In an optional ninth step 390, a radio map is generated. Further, the generated radio map may be provided to one or more electronic devices, in particular to the one or more electronic devices that are located in the vicinity of the moving venue (e.g. moving venue 130 of Fig. 1 and Fig. 2).

The radio map may enable electronic devices (e.g. electronic devices 190 of Fig. 2) to determine their respective position based on a non GNSS-based positioning system.

The radio map may be configured to enable the electronic devices to determine (e.g. estimate) their position at least partially based on this radio map when the respective electronic device is located in the area covered by the radio map, thus the area, or a part of it, of the moving venue 130 of Fig. 1 and Fig. 2.

For example, the radio map is represented by radio map information which may be provided (e.g. transmitted) e.g. by a positioning server to the respective electronic devices and/or which may be held available by the electronic devices (e.g. stored in memory means of the mobile device(s)). Alternatively or additionally, the radio map may be held available e.g. by the positioning server (e.g. stored in a memory means comprised by or connectable to the positioning server) so that based on e.g. fingerprint information provided by a respective electronic device to the positioning server, the positioning server may be configured to determine (e.g. estimate) the respective position of the electronic device based, at least in part, on the radio map. Then, the determined or estimated position of the respective electronic device is provided back to the respective electronic device.

For example, the radio map contains or represents a respective radio model for a plurality of radio nodes (e.g. WiFi Access Point, Bluetooth- or Bluetooth Low Energy Beacon Device) transmitting (e.g. broadcasting) radio signals that are observable within the area, or a part of it, of the moving venue. The area, or a part of it, of the moving venue is covered by the radio map.

The radio map may contain or represent one or more floors of the moving venue, as far as present, of the moving venue. The radio map may comprise for each floor of the one or more floors of the moving venue a respective radio model for a plurality of radio nodes transmitting (e.g. broadcasting) radio signals that are observable on the respective floor of the moving. A radio model may represent an expected two-dimensional or three-dimensional radio coverage of a radio device. The latter may enable to determine the height, and/or altitude of the respective electronic device whose position is to be determined. The height, and/or altitude may for instance be utilized to determine the floor on which the respective electronic device is located.

To enable more accurate determining of a respective position of a respective electronic device, a GNSS-based position may be utilized. Since the moving venue may change its position in relation to the global coordinate system, example embodiments according to all exemplary aspects enable that a respective electronic device may determine or request to determine its position based on such a GNSS-based positioning system. Thus, there may be a reference position of a respective electronic device associated with radio data that is derived from a GNSS-based positioning system in relation to the global coordinate system, e.g. represented by at least one first position estimate (see step 310). In order to enable to utilize such at least one first position estimate, the movement (e.g. heading change) of the moving venue may be needed to be considered. Thus, the at least one first position estimate in relation to the global coordinate system may be transformed to local coordinates or the local coordinate system of the moving venue (see step 350). The at least one venue location information represents a current or time series of locations of the moving venue. From these pieces of information, the movement and the orientation of the moving venue can be determined (e.g. derived). Thus, the at least one venue location information is used to determine the transformed at least one first position estimate, e.g. represented by at least one transformed position estimate (see step 340).

Further, this enables to generate and/or update the radio map of the moving venue based, at least in part, on the at least one first position estimate (GNSS-based reference position) and the at least one second position estimate. The latter is indicative of a reference position of a respective electronic device associated with radio data that is determined (e.g. derived) based, at least in part, on a non GNSS-based positioning system, e.g. from existing WiFi and/or Bluetooth and/or Bluetooth Low Energy based positioning system present within the area of the moving venue, in relation to the local coordinate system of the moving venue (see optional step 320). For instance, the at least one transformed position estimate and the at least one second position estimate may be fused to at least one fused position estimate enabling a very accurate reference position in relation to the local coordinate system of the moving venue (see optional step 360). Based on such at least one fused position estimate, the radio map may for instance be generated or updated.

Additionally, the at least one location change information (see optional step 330) may be utilized to generate and/or update the radio map of the moving venue. The at least one location change information may represent motion sensor data of a respective electronic device (e.g. electronic devices 190 of Fig. 2) enabling to enhance the accuracy of a respective reference position of the respective electronic device even more, since small changes of a position that are represented by such at least one location change information may be considered for the determining of the at least one fused position estimate (see optional step 360) in addition to the at least one first position estimate and the at least one second position estimate.

It will be understood that at least some of the steps 310 to 390 may for instance be performed and/or controlled by different entities. For instance, steps 310 to 330 may for instance be performed and/or controlled by at least one of the electronic devices 190. Then, steps 340 and 350 may for instance be performed and/or controlled by server 110. At least a part of the steps 310 to 390 may for instance be performed either by the server 110 and another part of the steps not being performed and/or controlled by the server 110 may for instance be performed and/or controlled by the at least one electronic device (e.g. one of the one or more electronic devices 190).

The steps 310 to 390 may for instance be performed and/or controlled multiple times, at least twice. This is indicated in the flowchart 300 by the arrow 390-1 pointing back to the start of the flowchart 300. Additionally or alternatively, after the step 380 is performed and/or controlled, the steps 350 to 380 may be performed and/or controlled again, or multiple times (e.g. at least twice), as indicated by the arrow 380-1. In particular, the determining of the at least one transformed position estimate (step 340) and/or the step of the determining of the at least one fused position may be performed and/or controlled multiple times (e.g. at least twice), as indicated by the arrow 370-1. For instance, the steps 340, and optionally 350 may be performed and/or controlled each time a "new" first position estimate (step 310), optional second position estimate (step 320), location change information (step 330), and/or venue location information (step 340) are obtained or determined. In this way, it is enabled to provide or utilize e.g. up-to-date transformed position estimates and/or fused position estimates for further usage, e.g. such as generating of a radio map for the moving venue (step 390).

For the communication, e.g. to provide and/or receive data, information or the like, for instance communication network 150 of Fig. 1 may be utilized.

In other words, when location reference must be computed in coordinates of the local coordinate system of the moving venue, but partially based on location data in coordinates of a global coordinate system (e.g. used by GNSS), and where the local coordinate system of the moving venue moves with respect to the global coordinate system, example embodiments according to all exemplary aspects may comprise one or more of the following:
1. Make a time series of location information (latitude, longitude, heading change) of the moving venue (e.g. a moving platform or moving venue 130 of Fig. 1 and Fig. 2) available to the devices (e.g. electronic devices 190 of Fig. 2) that collect probe data;
2. Convert latitude/longitude/heading of the collection device (e.g. GNSS) into local frame of the moving venue based on the location information of the moving venue:
   latitude/longitude/heading of the moving venue. Device location information and venue location information may be matched based on the timestamps;
3. Subtract heading change of the moving venue (e.g. ship) from the intrinsic heading change of the collection device;
4. Compute final probe references (e.g. at least one transformed and/or fused position estimate) in the local coordinate system of the moving venue using location and heading data computed at steps 2 and 3; and
5. Probe references computed at step 4 can be directly mapped to the local frame of the moving venue.

Fig. 4 is a schematic block diagram of an apparatus 400 according to an exemplary aspect, which may for instance represent one of the electronic devices 190 of Fig. 2. Alternatively, the schematic block diagram of the apparatus 400 according to an exemplary aspect may for instance represent server 110 of Fig. 1.

Apparatus 400 comprises a processor 410, working memory 420, program memory 430, data memory 440, communication interface(s) 450, an optional user interface 460 and (an) optional sensor(s) 470.

Apparatus 400 may for instance be configured to perform and/or control or comprise respective means (at least one of 410 to 470) for performing and/or controlling the method according to the first exemplary aspect. Apparatus 400 may as well constitute an apparatus comprising at least one processor (410) and at least one memory (420) including computer program code, the at least one memory and the computer program code configured to, with the at least one processor, cause an apparatus, e.g. apparatus 400 at least to perform and/or control the method according to the first exemplary aspect of the invention of the present invention.

Processor 410 may for instance comprise a position estimate obtainer 411-1 as a functional and/or structural unit. Position estimate obtainer 411-1 may for instance be configured to obtain a first and/or second position estimate (see steps 310 and/or 320 of Fig. 3).

Processor 410 may for instance comprise a position estimate determiner 411-2 as a functional and/or structural unit. Position estimate determiner 411-2 may for instance be configured to determine a first and/or second position estimate (see steps 310 and/or 320 of Fig. 3).

Processor 410 may for instance comprise a venue location information obtainer 411-3 as a functional and/or structural unit. Venue location information obtainer 411-3 may for instance be configured to obtain a venue location information (see step 340 of Fig. 3).

Processor 410 may for instance comprise a venue location information determiner 411-4 as a functional and/or structural unit. Venue location information determiner 411-4 may for instance be configured to determine a venue location information (see step 340 of Fig. 3).

Processor 410 may for instance comprise an optional location change information obtainer 411-5 as a functional and/or structural unit. Location change information obtainer 411-5 may for instance be configured to obtain a location change information (see step 330 of Fig. 3).

Processor 410 may for instance comprise an optional location change information determiner 411-6 as a functional and/or structural unit. Location change information determiner 411-6 may for instance be configured to determine a location change information (see step 330 of Fig. 3).

Processor 410 may for instance comprise a transformed position estimate determiner 411-7 as a functional and/or structural unit. Transformed position estimate determiner 411-7 may for instance be configured to determine a transformed position estimate (see step 350 of Fig. 3).

Processor 410 may for instance comprise an optional fused position estimate determiner 411-8 as a functional and/or structural unit. Fused position estimate determiner 411-8 may for instance be configured to determine a fused position estimate (see step 360 of Fig. 3).

Processor 410 may for instance comprise an optional matcher 411-9 as a functional and/or structural unit. Matcher 411-9 may for instance be configured to match the at least one first position estimate, the at least one second position estimate, and/or the at least one location change information to the at least one venue location information (see step 370 of Fig. 3).

Processor 410 may for instance comprise an optional heading change subtractor 411-10 as a functional and/or structural unit. Heading change subtractor 411-10 may for instance be configured to substract a heading change of the moving venue based, at least in part, on the at least one venue location information (see step 380 of Fig. 3).

Processor 410 may for instance comprise an optional radio map generator respective updater 411-11 as a functional and/or structural unit. Radio map generator respective updater 411-11 may for instance be configured to generate and/or update a radio map based, at least in part, on the at least one transformed position estimate and/or the at least one fused position estimate (see step 390 of Fig. 3).

Processor 410 may for instance further control the memories 420 to 440, the communication interface(s) 450, the optional user interface 460 and the optional sensor(s) 470.

Processor 410 may for instance execute computer program code stored in program memory 430, which may for instance represent a computer readable storage medium comprising program code that, when executed by processor 410, causes the processor 410 to perform the method according to the first exemplary aspect.

Processor 410 (and also any other processor mentioned in this specification) may be a processor of any suitable type. Processor 410 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 410 may for instance be an application processor that runs an operating system.

Program memory 430 may also be included into processor 410. This memory may for instance be fixedly connected to processor 410, or be at least partially removable from processor 410, for instance in the form of a memory card or stick. Program memory 430 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 430 may also comprise an operating system for processor 410. Program memory 430 may also comprise a firmware for apparatus 400.

Apparatus 400 comprises a working memory 420, for instance in the form of a volatile memory. It may for instance be a Random Access Memory (RAM) or Dynamic RAM (DRAM), to give but a few non-limiting examples. It may for instance be used by processor 410 when executing an operating system and/or computer program.

Data memory 440 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 440 may for instance store one or more pieces of first position estimates, one or more pieces of second position estimates, one or more pieces of location change information, one or more pieces of venue location information, one or more pieces of transformed position estimates, one or more pieces of fused position estimates, one or more radio maps or parts thereof, or a combination thereof, to name but a few non-limiting examples.

Communication interface(s) 450 enable apparatus 400 to communicate with other entities, e.g. with server 110 of Fig. 1 in case apparatus 400 is represented by one of the electronic devices 190 of Fig. 2, with other electronic devices (e.g. one of the other electronic devices 190-1 to 190-4 shown in Fig. 2. Communication interface(s) 450 enable apparatus 400 to communicate with other entities, e.g. with one of the electronic devices 190 of Fig. 2 in case apparatus 400 is represented by the server 110. The communication interface(s) 450 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 400 to communicate with other entities, for instance via the communication network 150 of Fig. 1.

User interface 460 is optional and may comprise a display for displaying information to a user and/or an input device (e.g. a keyboard, keypad, touchpad, mouse, etc.) for receiving information from a user.

Sensor(s) 470 are optional and may for instance comprise a barometric sensor, gyroscope, acceleration sensor or the like, e.g. to gather one or more pieces of pressure information indicative of an altitude change, one or more pieces of orientation information indicative of an orientation of the apparatus 400, one or more pieces of acceleration information indicative of a movement and/or acceleration and/or speed in a certain direction relative to a previous position, or a combination thereof, to name but a few non-limiting examples.

Some or all of the components of the apparatus 400 may for instance be connected via a bus. Some or all of the components of the apparatus 400 may for instance be combined into one or more modules.

The following embodiments shall also be considered to be disclosed:
Embodiment 1:
   An apparatus comprising at least one processor and at least one memory including computer program code, the at least one memory and the computer program code configured to, with the at least one processor, cause the apparatus at least to perform:
   - obtaining or determining at least one first position estimate, wherein the at least one first position estimate is indicative of a first position of at least one electronic device, wherein the first position is in relation to a global coordinate system;
   - obtaining or determining at least one venue location information indicative of a location and orientation of a moving venue in relation to the global coordinate system; and
   - determining at least one transformed position estimate by transforming the first position of the at least one first position estimate into a transformed position in relation to a local coordinate system of the moving venue based, at least in part, on the at least one venue location information.
Embodiment 2:
   The apparatus according to embodiment 1, the at least one memory and the computer program code configured to, with the at least one processor, cause the apparatus further to perform:
   - obtaining or determining at least one location change information, wherein the at least one location change information is indicative of a change of position of the at least one electronic device in relation to the local coordinate system; and
   - determining at least one fused position estimate indicative of at least one fused position in relation to the local coordinate system of the moving venue based on the at least one transformed position estimate and the at least one location change information.
Embodiment 3:
   The apparatus according to any of the preceding embodiments, the at least one memory and the computer program code configured to, with the at least one processor, cause the apparatus further to perform:
   - obtaining or determining at least one second position estimate, wherein the at least one second position estimate is indicative of a second position in relation to the local coordinate system.
Embodiment 4:
   The apparatus according to embodiment 3, wherein the at least one fused position estimate is determined further based on the at least one second position estimate.
Embodiment 5:
   The apparatus according to any of the embodiments 2 to 4, the at least one memory and the computer program code configured to, with the at least one processor, cause the apparatus further to perform:
   - generating a radio map for the moving venue based, at least in part, on the at least one transformed position estimate and/or the at least one fused position estimate.
Embodiment 6:
   The apparatus according to embodiment 5, the at least one memory and the computer program code configured to, with the at least one processor, cause the apparatus further to perform:
   - determining whether or not the first position of the at least one first position estimate is located in a vicinity of the moving venue based, at least in part, on the at least one venue location.
Embodiment 7:
   The apparatus according to any of the embodiments 3 to 6, wherein the at least one second position estimate is determined based on at least one fingerprint information gathered by the at least one electronic device, and/or based on at least one location estimate representing a position in relation to a local coordinate system of the moving venue prior to the obtaining or determining of the at least one second position estimate.
Embodiment 8:
   The apparatus according to any of the embodiments 2 to 7, wherein the at least one location change information comprises sensor data gathered by one or more sensors.
Embodiment 9:
   The apparatus according to any of the embodiments 3 to 8, wherein the at least one first position estimate, the at least one second position estimate, the at least one location change information, and/or the at least one venue location information further comprise a timestamp information indicative of a time and/or date at which the respective position estimate and/or piece of information is obtained or determined.
Embodiment 10:
   The apparatus according to embodiment 9, wherein the determining of the at least one fused position estimate further comprises:
   - matching the at least one first position estimate, the at least one second position estimate and/or the at least one location change information to the at least one venue location information based, at least in part, on the respective pieces of timestamp information.
Embodiment 11:
   The apparatus according to any of the embodiments 2 to 10, wherein the determining of the at least one fused position estimate further comprises:
   - subtracting a heading change of the moving venue represented by the at least one venue location information from an intrinsic heading change comprised by the at least one first position estimate and/or the at least one location change information,
      wherein the at least one fused position estimate is determined further based on a result of the subtracting.
Embodiment 12:
   The apparatus according to any of the preceding embodiments, wherein the at least one venue location information is obtained based on a gathering by an electronic device being coupled to the moving venue, or by the at least one electronic device being in a static location in relation to the moving venue.
Embodiment 13:
   An apparatus comprising at least one processor and at least one memory including computer program code, the at least one memory and the computer program code configured to, with the at least one processor, cause an apparatus at least to perform and/or control the method of the first exemplary aspect.
Embodiment 14:
   A system, comprising:
   - one or more electronic devices, e.g. one or more apparatuses according to any of the embodiments 1 to 12; and
   - at least one positioning server, e.g. another apparatus according to any of the embodiments 1 to 12;
      wherein the one or more electronic devices and the at least one positioning server are configured to perform and/or control the method of the first exemplary aspect together.
Embodiment 15:
   A tangible computer-readable medium storing computer program code, the computer program code when executed by a processor causing an apparatus to perform and/or control the method of the first exemplary aspect.
Embodiment 16:
   A tangible computer-readable medium storing computer program code, the computer program code when executed by a processor causing an apparatus to perform and/or control:
   - obtaining or determining at least one first position estimate, wherein the at least one first position estimate is indicative of a first position of at least one electronic device, wherein the first position is in relation to a global coordinate system;
   - obtaining or determining at least one venue location information indicative of a location and orientation of a moving venue in relation to the global coordinate system; and
   - determining at least one transformed position estimate by transforming the first position of the at least one first position estimate into a transformed position in relation to a local coordinate system of the moving venue based, at least in part, on the at least one venue location information.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

### Reference Signs

- 100,200: System
- 110: Server (e.g. Positioning Server)
- 120: Database
- 130: Moving Venue
- 140: Global Coordinate System
- 150: Communication Network
- 160: GNSS
- 170: Heading Vector of Moving Venue
- 180: Local Coordinate System
- 190: Electronic Device
- 300: Flowchart
- 310-390: Steps of Flowchart
- 400: Apparatus
- 410: Processor
- 411: Functional and/or Structural Unit of Apparatus
- 420: Working Memory
- 430: Program Memory
- 440: Data Memory
- 450: Communication Interface(s)
- 460: User Interface
- 470: Sensor(s)

## Claims

1. A method comprising:
- obtaining or determining at least one first position estimate, wherein the at least one first position estimate is indicative of a first position of at least one electronic device, wherein the first position is in relation to a global coordinate system;
- obtaining or determining at least one venue location information indicative of a location and orientation of a moving venue in relation to the global coordinate system; and
- determining at least one transformed position estimate by transforming the first position of the at least one first position estimate into a transformed position in relation to a local coordinate system of the moving venue based, at least in part, on the at least one venue location information.

2. The method according to claim 1, further comprising:
- obtaining or determining at least one location change information, wherein the at least one location change information is indicative of a change of position of the at least one electronic device in relation to the local coordinate system; and
- determining at least one fused position estimate indicative of at least one fused position in relation to the local coordinate system of the moving venue based on the at least one transformed position estimate and the at least one location change information.

3. The method according to any of the preceding claims, further comprising:
- obtaining or determining at least one second position estimate, wherein the at least one second position estimate is indicative of a second position in relation to the local coordinate system.

4. The method according to claim 3, wherein the at least one fused position estimate is determined further based on the at least one second position estimate.

5. The method according to any of the claims 2 to 4, further comprising:
- generating a radio map for the moving venue based, at least in part, on the at least one transformed position estimate and/or the at least one fused position estimate.

6. The method according to claim 5, further comprising:
- determining whether or not the first position of the at least one first position estimate is located in a vicinity of the moving venue based, at least in part, on the at least one venue location.

7. The method according to any of the claims 3 to 6, wherein the at least one second position estimate is determined based on at least one fingerprint information gathered by the at least one electronic device, and/or based on at least one location estimate representing a position in relation to a local coordinate system of the moving venue prior to the obtaining or determining of the at least one second position estimate.

8. The method according to any of the claims 2 to 7, wherein the at least one location change information comprises sensor data gathered by one or more sensors.

9. The method according to any of the claims 3 to 8, wherein the at least one first position estimate, the at least one second position estimate, the at least one location change information, and/or the at least one venue location information further comprise a timestamp information indicative of a time and/or date at which the respective position estimate and/or piece of information is obtained or determined.

10. The method according to claim 9, wherein the determining of the at least one fused position estimate further comprises:
- matching the at least one first position estimate, the at least one second position estimate and/or the at least one location change information to the at least one venue location information based, at least in part, on the respective pieces of timestamp information.

11. The method according to any of the claims 2 to 10, wherein the determining of the at least one fused position estimate further comprises:
- subtracting a heading change of the moving venue represented by the at least one venue location information from an intrinsic heading change comprised by the at least one first position estimate and/or the at least one location change information,
wherein the at least one fused position estimate is determined further based on a result of the subtracting.

12. The method according to any of the preceding claims, wherein the at least one venue location information is obtained based on a gathering by an electronic device being coupled to the moving venue, or by the at least one electronic device being in a static location in relation to the moving venue.

13. An apparatus configured to perform and/or control or comprising respective means for performing and/or controlling the method of any of the claims 1 to 12.

14. A system, comprising:
- one or more electronic devices; and
- at least one positioning server;
wherein the one or more electronic devices and the at least one positioning server are configured to perform and/or control the method of any of the claims 1 to 12 together.
